# EUROPÄISCHE PATENTSCHRIFT

(11) **EP 0 494 345 B1**
(45) Veröffentlichungstag und Bekanntmachung des Hinweises auf die Patenterteilung: **13.10.1993**
(21) Anmeldenummer: 91116379.8
(22) Anmeldetag: 26.09.1991
(51) Int. Cl.: B23K 37/04, B23K 26/00, B23K 11/087, B23K 9/025

(54) **Bandschweissmaschine**
Strip metal joining apparatus
Machine pour réunir bout à bout des bandes métalliques

(30) Priorität: 08.01.1991 DE 4100302
(43) Veröffentlichungstag der Anmeldung: 15.07.1992
(73) Patentinhaber: BWG BERGWERK- UND WALZWERK-MASCHINENBAU GMBH, D-47051 Duisburg (DE)
(72) Erfinder: Noé, Oskar, Dipl.-Ing., W-4330 Mülheim/Ruhr (DE)
(74) Vertreter: Honke, Manfred, Dr.-Ing.

(56) Entgegenhaltungen:
- EP-A- 0 125 332
- DE-A- 2 341 255
- GB-A- 901 149
- US-A- 2 292 851
- PATENT ABSTRACTS OF JAPAN vol. 10, no. 277 (M-519)(2333) 19. September 1986, & JP-A-61 099575 (YAZAKI KAKO K.K.) 17 MAI 1986

## Beschreibung

Die Erfindung betrifft eine Bandschweißmaschine zum Schweißen von Schnittflächen, insbesondere gestoßenen Schnittflächen, an jeweils dem Bandanfang und dem Bandende miteinander zu verbindender Metallbänder, mit voneinander getrennten Schneidwerkzeugen zum Erzeugen der Schnittflächen und einer zwischen den Schneidwerkzeugen angeordneten Schweißvorrichtung mit einem unterhalb der Schweißvorrichtung vorgesehenen Schweißtisch mit einem Führungsspalt für einen in dem Führungsspalt über die Tischebene hochfahrbaren Schweißanschlag für das jeweilige Bandende und/oder den jeweiligen Bandanfang.

Derartige Bandschweißmaschinen werden bevorzugt in kontinuierlich arbeitende Bandbehandlungslinien eingesetzt. Denn in solchen Bandbehandlungslinien müssen nach Durchlauf eines Coils das Bandende und der Bandanfang des neuen Coils miteinander verbunden werden. Das geschieht bei den bekannten Bandschweißmaschinen bevorzugt im Wege des Laser-Schweißens. Durch das Laser-Schweißen sollen - um die Planheit der Metallbänder auch im Bereich ihrer Verbindungsnaht zu gewährleisten - Schweißüberstände bzw. -verdickungen vermieden werden. Allerdings funktioniert das Laser-Schweißen nur dann, wenn eine einwandfreie Zustellung der Schnittflächen erfolgt. Eine einwandfreie Zustellung der Schnittflächen wird aber auch für andere Schweißtechniken verlangt. - Hier setzt die Erfindung ein.

Der Erfindung liegt die Aufgabe zugrunde, eine Bandschweißmaschine der eingangs beschriebenen Art zu schaffen, bei der sich Bandanfang und Bandende der miteinander zu verbindenden Bänder exakt einerseits den Schneidvorrichtungen, andererseits mit ihren in den Schneidvorrichtungen erzeugten Schnittflächen der Schweißvorrichtung zustellen lassen.

Diese Aufgabe löst die Erfindung bei einer gattungsgemäßen Bandschweißmaschine dadurch, daß dem einlaufseitigen Schneidwerkzeug in Bandlaufrichtung ein über die Bandebene hochfahrbarer Schneidanschlag und dem einen Band ein in Bandlaufrichtung arbeitender Meßtreiber vorgeordnet sind, und daß dem auslaufseitigen Schneidwerkzeug in Bandlaufrichtung ein über die Bandebene hochfahrbarer Schneidanschlag und dem anderen Band ein gegen Bandlaufrichtung arbeitender Meßtreiber nachgeordnet sind. - Die Erfindung geht von der Erkenntnis aus, daß die im Wege des Schweißens zu verbindenden Bandenden von Metallbändern exakt im Bereich der Schweißvorrichtung positioniert werden müssen. Diese Positionierung gelingt im Rahmen der Erfindung mittels der beiden Meßtreiber rechts und links von der Verbindungs- bzw. Schweißstelle. Dabei dienen die Meßtreiber zugleich zum Positionieren der betreffenden Bandenden im Bereich der Schneidwerkzeuge. Hierzu werden die betreffenden Bandenden mittels der Meßtreiber gegen die hochgefahrenen Schneidanschläge gefahren. Nach dem Schnitt wird das auslaufseitige Bandende durch den auslaufseitigen Meßtreiber zu dem Schweißanschlag verfahren, der die Mitte der Verbindungs- bzw. Schweißstelle darstellt. Die Anstellkraft ist beliebig einstellbar. Danach wird das betreffende Bandende auf dem Schweißtisch festgeklemmt und der Schweißanschlag abgesenkt. Dann wird das einlaufseitige Bandende gegen die Stoßkante des auslaufseitigen Bandendes mit einstellbarer Anstellkraft verfahren. Anschließend kann der Schweißvorgang erfolgen. - Um jede Deformation wie beispielsweise Walzeffekte an den Bandenden der beiden zu verbindenden Metallbänder mit Sicherheit auszuschalten, schlägt die Erfindung weiter vor, und diesem Vorschlag kommt selbständige Bedeutung zu, daß jeder Meßtreiber eine Oberrolle, z. B. Stahlrolle, mit einer in festigkeitsmäßiger Hinsicht harten Beschichtung und eine Unterrolle mit einer elastisch nachgiebigen Beschichtung aufweist. Dabei besitzt die Beschichtung der Oberrolle eine definierte Körnung, von z. B. 5µm bis 15µm aus Tungstencarbid. Die Unterrolle weist zweckmäßigerweise eine elastisch nachgiebige Beschichtung aus Gummi oder Kunststoff auf. Die Unterrolle funktioniert als Schlepprolle. - Die Meßtreiber, deren anstellbare Oberrolle für Wegmessung zur Ermittlung von Anstellgeschwindigkeit und Anstellkraft herangezogen wird, sind von Servomotoren angetrieben, die eine Feinstzustellung ermöglichen. - Im übrigen können den Meßtreibern Seitenzentriervorrichtungen für das jeweilige Band vor- bzw. nachgeordnet sein.

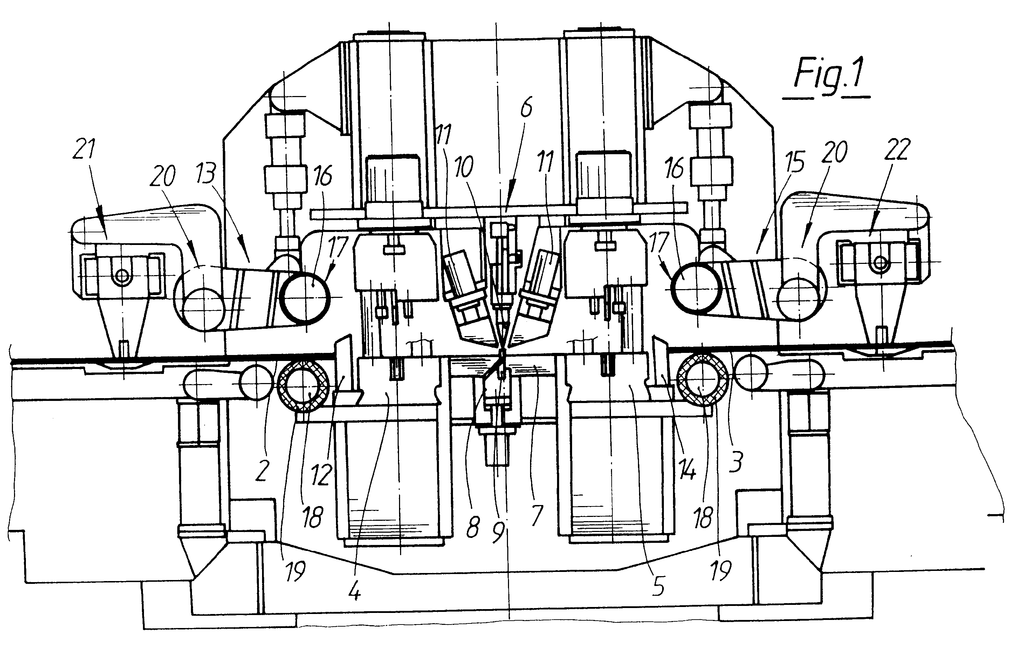

Im folgenden wird die Erfindung anhand einer lediglich ein Ausführungsbeispiel darstellenden Zeichnung näher erläutert; es zeigen
- Fig. 1: eine erfindungsgemäße Bandschweißmaschine in schematischer Seitenansicht mit geöffneten Meßtreibern,

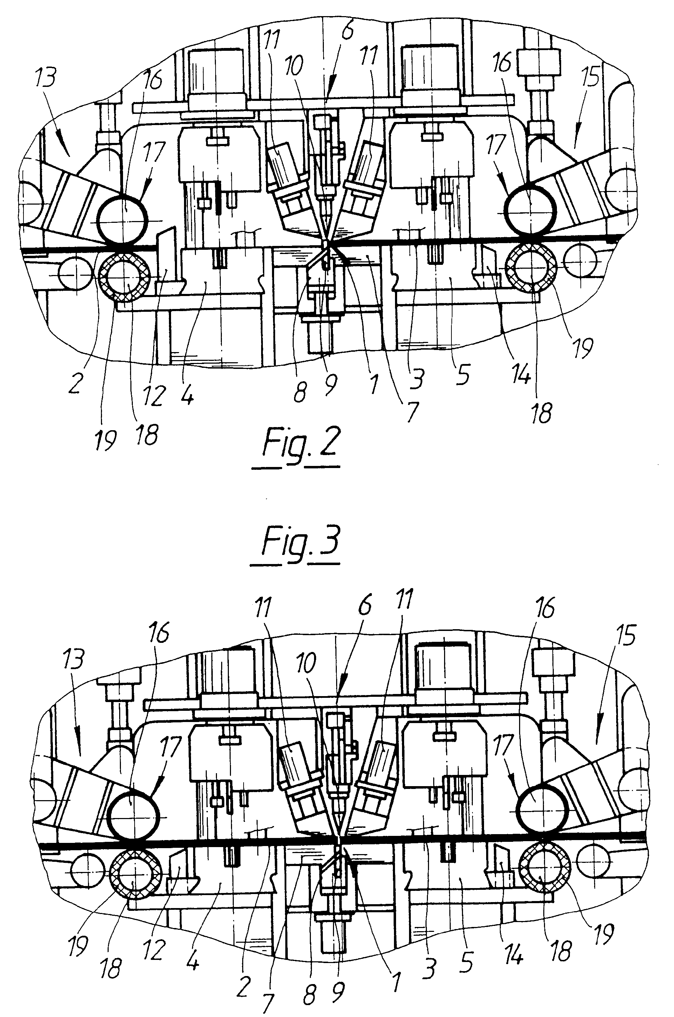

- Fig. 2: einen Ausschnitt aus dem Gegenstand nach Fig. 1 mit gegen den Schweißanschlag verfahrenem auslaufseitigem Bandende mit geschlossenen Meßtreibern und
- Fig. 3: einen Ausschnitt aus dem Gegenstand nach Fig. 1 mit in Schweißposition befindlichen Bandenden.

In den Figuren ist eine Bandschweißmaschine zum Schweißen von Schnittflächen, insbesondere gestoßenen Schnittflächen 1, an jeweils dem Bandanfang 2 und dem Bandende 3 miteinander zu verbindender Metallbänder dargestellt. Diese Bandschweißmaschine weist voneinander getrennte Schneidwerkzeuge 4, 5 zum Erzeugen der Schnittflächen 1 und eine zwischen den Schneidwerkzeugen 4, 5 angeordnete Schweißvorrichtung 6 - bevorzugt Laser-Schweißvorrichtung - auf. Unterhalb der Schweißvorrichtung 6 ist ein Schweißtisch 7 mit einem Führungsspalt 8 für einen in dem Führungsspalt 8 über die Tischebene hochfahrbaren und absenkbaren Schweißanschlag 9 für das jeweilige Bandende oder den jeweiligen Bandanfang vorgesehen. Die Schweißvorrichtung 6 weist ferner einen angedeuteten Schweißkopf 10 und beidseitig gegen den Schweißtisch 7 niederfahrbare Schweißklemmen 11 auf. Die beiden voneinander getrennten Schneidwerkzeuge 4, 5 weisen jeweils zwei Untermesser und ein nahezu spaltlos zwischen die beiden Untermeser einfahrendes Obermesser auf. Dem einlaufseitigen Schneidwerkzeug 4 sind in Bandlaufrichtung ein über die Bandebene hochfahrbarer Schneidanschlag 12 und dem einen Band ein in Bandlaufrichtung arbeitender Meßtreiber 13 vorgeordnet. Dem auslaufseitigen Schneidwerkzeug 5 sind in Bandlaufrichtung ein über die Bandebene hochfahrbarer Schneidanschlag 14 und dem anderen Band ein gegen Bandlaufrichtung arbeitender Meßtreiber 15 nachgeordnet. Jeder Meßtreiber 13, 15 weist eine Oberrolle 16, z. B. Stahlrolle, mit einer harten Beschichtung 17, z. B. Plasma-Beschichtung aus Tungstencarbid, und eine Unterrolle 18 mit einer elastisch nachgiebigen Beschichtung 19 auf. Während die Oberrolle 16 angetrieben ist, arbeitet die Unterrolle 18 als Schlepprolle. Die Beschichtung 17 der Oberrolle 16 weist eine definierte Körnung von z. B. 5µm bis 15µm auf. Die Unterrolle 18 besitzt eine elastisch nachgiebige Beschichtung 19 aus Gummi oder Kunststoff.

Die Meßtreiber 13, 15 sind von Servomotoren 20 angetrieben. Außerdem sind den Meßtreibern 13, 15 Seitenzentriervorrichtungen 21, 22 für das jeweilige Band vor- bzw. nachgeordnet, was lediglich angedeutet ist. - Die Meßtreiber 13, 15 gewährleisten eine exakte Positionierung der jeweiligen Bandenden 2, 3 zunächst in Schneidstellung und anschließend in Schweißstellung.

## Patentansprüche

1. Bandschweißmaschine zum Schweißen von Schnittflächen (1), insbesondere gestoßenen Schnittflächen, an jeweils dem Bandanfang (2) und dem Bandende (3) miteinander zu verbindender Metallbänder, mit voneinander getrennten Schneidwerkzeugen (4,5) zum Erzeugen der Schnittflächen (1) und einer zwischen den Schneidwerkzeugen (4,5) angeordneten Schweißvorrichtung (6) mit einem unterhalb der Schweißvorrichtung (6) vorgesehenen Schweißtisch (7) mit einem Führungsspalt (8) für einen in dem Führungsspalt (8) über die Tischebene hochfahrbaren Schweißanschlag (9) für das jeweilige Bandende (3) oder den jeweiligen Bandanfang (2) , **dadurch gekennzeichnet,** daß dem einlaufseitigen Schneidwerkzeug (4) in Bandlaufrichtung ein über die Bandebene hochfahrbarer Schneidanschlag (12) und dem einen Band ein in Bandlaufrichtung arbeitender Meßtreiber (13) vorgeordnet sind, und daß dem auslaufseitigen Schneidwerkzeug (5) in Bandlaufrichtung ein über die Bandebene hochfahrbarer Schneidanschlag (14) und dem anderen Band ein gegen Bandlaufrichtung arbeitender Meßtreiber (15) nachgeordnet sind.

2. Bandschweißmaschine nach Anspruch 1, dadurch gekennzeichnet, daß jeder Meßtreiber (13, 15) eine Oberrolle (16), z. B. Stahlrolle, mit einer harten Beschichtung (17), z. B. aus Tungstencarbid, und eine Unterrolle (18) mit einer elastisch nachgiebigen Beschichtung (19) aufweist.

3. Bandschweißmaschine nach Anspruch 1 oder 2, dadurch gekennzeichnet, daß die Beschichtung (17) der Oberrolle (16) eine definierte Körnung von 5µm bis 15µm aufweist.

4. Bandschweißmaschine nach einem der Ansprüche 1 bis 3, dadurch gekennzeichnet, daß die Unterrolle (18) eine Beschichtung (19) aus Gummi oder Kunststoff aufweist.

5. Bandschweißmaschine nach einem der Ansprüche 1 bis 4, dadurch gekennzeichnet, daß die Meßtreiber (13, 15) von Servomotoren (20) angetrieben sind.

6. Bandschweißmaschine nach einem der Ansprüche 1 bis 5, dadurch gekennzeichnet, daß den Meßtreibern (13, 15) Seitenzentriervorrichtungen (21, 22) für das jeweilige Band vor- bzw. nachgeordnet sind.

## Claims

1. A strip welding machine for welding cut edges (1), particularly cut edges to be butt jointed, at each strip start (2) and strip end (3) of metal strips to be joined to each other, with cutting tools (4, 5) separated from each other for producing the cut edges (1) and a welding device (6) disposed between the cutting tools (4, 5), with a welding table (7) provided below the welding device (6) having a guide aperture (8) for a welding stop (9) for the respective strip end (3) or the respective strip start(2), which welding stop is height-adjustable above the plane of the table within the guide aperture (8), characterised in that a cutting stop (12) which is height-adjustable above the plane of the strip is disposed in the direction of strip travel upstream of the cutting tool (4) on the input side and a measuring driver (13) operating in the direction of strip travel is disposed upstream of one strip, and that a cutting stop (14) which is height-adjustable above the plane of the strip is disposed in the direction of strip travel downstream of the cutting tool (5) on the output side and a measuring driver (15) operating opposite to the direction of strip travel is disposed downstream of the other strip.

2. A strip welding machine according to claim 1, characterised in that each measuring driver (13, 15) has a top roller (16), e.g. a steel roller, with a hard coating (17), e.g of tungsten carbide, and a bottom roller (18) with a flexible resilient coating (19).

3. A strip welding machine according to claim 1 or 2, characterised in that the coating (17) on the top roller (16) has a defined grain size distribution of 5 µm to 15 µm.

4. A strip welding machine according to any one of claims 1 to 3, characterised in that the bottom roller (18) has a coating (19) of rubber or plastic.

5. A strip welding machine according to any one of claims 1 to 4, characterised in that the measuring drivers (13, 15) are driven by servomotors (20).

6. A strip welding machine according to any one of claims 1 to 5, characterised in that lateral centring devices (21, 22) for the respective strip are disposed upstream or downstream of the measuring drivers (13, 15).

## Revendications

1. Machine à souder des bandes pour le soudage de sur faces de coupe (1), en particulier de surfaces de coupe mises bout-à-bout, situées respectivement au début (2) et à la fin (3) de deux bandes métalliques à réunir, avec des outils de coupe (4, 5) séparés l'un de l'autre pour produire les surfaces de coupe (1) et un dispositif de soudage (6) disposé entre les outils de coupe (4, 5), avec une table de soudage (7) prévue en dessous du dispositif de soudage (6) avec une fente de guidage (8) pour une butée de soudage (9) pouvant être soulevée au-dessus du plan de la table, pour la fin de bande (3) ou pour le commencement de bande (2), respectivement,
**caractérisée** en ce que, en amont de l'outil de coupe (4) du côté entrant sont disposés, dans le sens de circulation de la bande, une butée de coupe (12) pouvant être soulevée au-dessus du plan de la bande et un dispositif d'entraînement et de mesure (13) agissant sur la bande dans le sens de circulation de la bande, et en ce que, en aval de l'outil de coupe (5) du côté sortant sont disposés, dans le sens de circulation de la bande, une butée de coupe (14) pouvant être soulevée au-dessus du plan de la bande, et un dispositif d'entraînement et de mesure (15) agissant sur l'autre bande en sens contraire au sens de circulation de la bande.

2. Machine à souder des bandes selon la revendication 1, caractérisée en ce que chaque dispositif d'entraînement et de mesure (13, 15) présente un rouleau supérieur (16), par exemple un rouleau en acier avec un revêtement dur (17), par exemple en carbure de tungstène, et un rouleau inférieur (18) avec un revêtement (19) élastique et souple.

3. Machine à souder des bandes selon la revendication 1 ou 2, caractérisée en ce que le revêtement (17) du rouleau supérieur (16) présente une granulométrie bien définie de 5 µm à 15 µm.

4. Machine à souder des bandes selon une des revendications 1 à 3, caractérisée en ce que le rouleau inférieur (18) présente un revêtement (19) en caoutchouc ou en matière plastique.

5. Machine à souder des bandes selon une des revendications 1 à 4, caractérisée en ce que les dispositifs d'entraînement et de mesure (13, 15) sont entraînés par des servo-moteurs (20).

6. Machine à souder des bandes selon une des revendications 1 à 5, caractérisée en ce que des dispositifs de centrage latéraux (21, 22) pour la bande respective sont disposés en amont et en aval des dispositifs d'entraînement et de mesure (13, 15) respectifs.
